# EUROPÄISCHE PATENTANMELDUNG

(11) **EP 1 495 999 A1**
(43) Veröffentlichungstag der Anmeldung: **12.01.2005**
(21) Anmeldenummer: 03015828.1
(22) Anmeldetag: 10.07.2003
(51) Int. Cl.: B65G 47/90, B65G 61/00, B65H 19/12

(54) **Vorrichtung zum Entpalettieren eines Bobinenstapels mit einem Laserdistanzmesssystem und Verwendung eines Laserdistanzmesssystem zur Erfassung von topografischen Daten eines Bobinenstapels**

(71) Anmelder: Hauni Maschinenbau AG, 21033 Hamburg (DE)
(72) Erfinder: Mikulic, Josip, 20535 Hamburg (DE)
(74) Vertreter: Seemann, Ralph, Dr. Dipl.-Phys.

(57) **Zusammenfassung**

Die Erfindung betrifft eine Verwendung eines, insbesondere nach dem Prinzip der Pulszeitmessung arbeitenden, Laserdistanzmeßsystems (40) sowie eine Vorrichtung (10) zum Entpalettieren von Bobinenstapeln (30, 35). Die Erfindung ist dadurch weitergebildet, dass mittels des Laserdistanzmeßsystems (40) topologische Daten eines Bobinenstapels (30,35) erfasst werden, wobei anhand der topologischen Daten der Mittelpunkt wenigstens einer Bobine (30, 35) ermittelt wird. Die Vorrichtung (10) wird dadurch weitergebildet, dass wenigstens ein, insbesondere nach dem Prinzip der Pulszeitmessung arbeitendes, Laserdistanzmeßsystem (40) zur Ermittlung der topologischen Daten des Bobinenstapels (30, 35) vorgesehen ist.

## Beschreibung

Die Erfindung betrifft eine Verwendung, insbesondere nach dem Prinzip der Pulszeitmessung arbeitenden, eines Laserdistanzmeßsystems sowie eine Vorrichtung zum Entpalettieren eines Bobinenstapels.

Auf Verpackungsmaschinen, bspw. Einschlagmaschinen, wird Verpackungsmaterial, wie z.B. Papier, Aluminiumfolie, Kunststofffolie oder Laminatfolie, von Rollen verarbeitet, die auch als Bobinen bezeichnet werden. Diese Bobinen werden zu einer Abspulvorrichtung gebracht und auf diese aufgeschoben. Auch auf tabakverarbeitenden Maschinen, z.B. Zigarettenherstellungsmaschinen, werden Bobinen mit Papier benötigt.

In DE-A-35 01 692 ist eine Vorrichtung zum Entladen einzelner Bobinen von einer Unterlage bzw. Palette offenbart. Hierbei wird eine Greifvorrichtung über Linearantriebe in einer Ebene verfahren, die an einem höhenverstellbaren Rahmen angeordnet ist. Am Rahmen sind Sensoren befestigt, die die Position der in einer Ebene liegenden Bobinen erfassen und die Höhenverstellung des Rahmens steuern. Die Sensoren können dabei jeweils zu einer Bobinenreihe auf einer Palette zugeordnet sein.

Um die Beladung bzw. die Beladungshöhe von Bobinenstapeln auf Paletten zu erfassen, werden diese in der Praxis zunächst mit einem Ultraschallsensor die Paletten abgetastet. Hierbei wird der Ultraschallsensor mäanderförmig über die mit Bobinen beladene Paletten gefahren. Anschließend wird mit einem Lasertaster der Mittelpunkt einer zu greifenden Bobine ermittelt, wobei sich die Startposition des Lasertasters aus der Messung mit dem Ultraschallsensor ergibt. Der Mittelpunkt einer zu greifenden Bobine wird nachfolgend aus drei Messpunkten der Bobinenaussenkante und drei Messpunkten der Bobineninnenkante ermittelt.

Diese Vorgehensweise hat den Nachteil, dass sie sehr zeitraubend und wegen der beiden Sensoreinrichtungen äußerst aufwendig ist. Dadurch wird eine gewünschte Steigerung der Produktionsgeschwindigkeit verhindert.

Ausgehend von diesem Stand der Technik, ist es Aufgabe der vorliegenden Erfindung die Lageerkennung von gestapelten Bobinen auf einfache Weise zu verbessern, wobei es möglich sein soll, die Bobinen schneller greifen zu können.

Die Lösung der Aufgabe erfolgt durch die Verwendung eines, insbesondere nach dem Prinzip der Pulszeitmessung arbeitenden, Laserdistanzmeßsystems zur Erfassung von topologischen Daten eines Bobinenstapels, wobei anhand der topologischen Daten der Mittelpunkt wenigstens einer Bobine ermittelt wird. Durch die Abrasterung einer Anordnung von mehreren Bobinen werden bei einer Verfahrbewegung des Laserdistanzmeßsystems alle angeordneten Bobinenreihen bezüglich ihrer Höhe erfasst. Im Gegensatz zu dem bisher eingesetzten Ultraschallsensor, der eine Messkeule aufweist, hat der Einsatz eines Laserdistanzmeßsystems den Vorteil, dass die Höhen von Bobinen und deren Verteilung genauer und gezielter in einem Schritt gemessen werden können. Insbesondere sind auch vollkommen willkürlich auf einer Palette angeordnete Bobinenstapel dreidimensional erfassbar und über eine Auswerteeinheit nahezu punktgenau erkennbar. Ferner können auch sehr kleine Flächen präzise erkannt werden. Unter dem Begriff topologische Daten werden insbesondere Höhendaten der stapelweise angeordneten Bobinen verstanden.

Das Laserdistanzmeßsystem arbeitet nach dem Prinzip der Lichtlaufmessung, so dass durch die Erfassung der Laufzeit eines Laserimpulses der Abstand zwischen dem Laserdistanzmeßsystem und einer reflektierenden Fläche z.B. eine Bobine ermittelt wird. Dies wird dadurch erreicht, dass durch einen Drehspiegel ein gepulster Laserstrahl abgelenkt und von der Oberfläche einer Bobine reflektiert wird. Durch schrittweises Verdrehen des Spiegels wird der gesamte Bobinenstapel fächerförmig abgetastet wird. Der reflektierte Laserstrahl wird als Abtastergebnis einer Auswerteeinheit zugeführt. Hierdurch wird die Verteilung von Bobinen auf einem Stapel auf einfache Weise schnell und zuverlässig erfasst.

Dazu ist vorteilhafterweise vorgesehen, dass der Bobinenstapel in mehreren, vorzugsweise parallelen, Linien abgerastert wird.

Eine Verkürzung in der Messzeit wird dadurch erreicht, dass die topologischen Daten während einer einzigen Rasterfahrt des Laserdistanzmeßsystems erfasst werden. Durch ein einmaliges Abscannen des Bobinenstapels werden sämtliche oben liegenden Bobinen in einem Durchlauf erfasst, so dass dadurch unmittelbar danach die Mittelpunkte aller oben liegenden Bobinen anhand der topologischen Daten ermittelt werden. Hierdurch kann eine Greifvorrichtung schneller und exakter zu den Bobinenmittelpunkten gesteuert bzw. gefahren werden.

In einer vorteilhaften Ausgestaltung der Erfindung ist vorgesehen, dass während der Rasterfahrt ein gepulster Laserstrahl des Laserdistanzmeßsystem durch einen internen Drehspiegel abgelenkt und dabei die Oberfläche der Bobinenstapel fächerartig und zweidimensional, d.h. linienförmig, nach Art eines Laser-Radars abgetastet wird.

Eine weitere Verbesserung wird dadurch erreicht, dass anhand der topologischen Daten die Höhe wenigstens einer Bobine ermittelt wird.

Außerdem ist das Laserdistanzmeßsystem an einem Portalroboter bevorzugterweise angeordnet ist.

Die Aufgabe wird ferner gelöst durch eine Vorrichtung zum Entpalettieren eines Bobinenstapels, die dadurch weitergebildet ist, dass wenigstens ein, insbesondere nach dem Prinzip der Pulszeitmessung arbeitendes, Laserdistanzmeßsystem zur Ermittlung der topologischen Daten des Bobinenstapels vorgesehen ist. Bei einer Vorrichtung nach der DE-A-35 01 692 (entspricht US-4,723,884), die vollumfänglich in die vorliegende Patentanmeldung aufgenommen ist, werden Bobinen von einer Unterlage, auf der die Bobinen in mehreren Reihen nebeneinander und in mehreren Lagen übereinander gestapelt sind, mittels eines Greifers entladen. Der Greifer erfasst gezielt die einzelnen Bobinen und führt sie entweder unmittelbar einer Abspulvorrichtung einer nachgeschalteten Verpackungsmaschine oder einem Transportsystem zu, das die Bobinen zu einer Abspulvorrichtung oder einem der Abspulvorrichtung angeordneten Puffermagazin transportiert.

In einer vorteilhaften Weiterbildung der Erfindung ist vorgesehen, dass mittels der topologischen Daten der Mittelpunkt und/oder die Höhe wenigstens einer Bobine ermittelbar sind.

Insbesondere ist dem Laserdistanzmeßsystem wenigstens eine Greifeinrichtung für die Bobinen zugeordnet, so dass dadurch die Bobinen einer Abspulvorrichtung einer Verarbeitungs- bzw. Verpackungsmaschine zugestellt werden.

Weiterhin ist es von Vorteil, wenn die Greifeinrichtung mittels der topologischen Daten und/oder anhand der ermittelten Mittelpunkte der Bobinen steuerbar ist.

Bevorzugterweise ist die Vorrichtung als Portalroboter ausgebildet. Ein Portalroboter besteht aus einem Portal, das sich auf zwei Schienen in Längsrichtung (x-Achse) bewegen kann. Auf dem Querträger des Portals ist eine Laufkatze montiert, die sich quer zur Bewegungsrichtung des Portals bewegen kann (y-Achse). An der Laufkatze wiederum ist ein Greifarm montiert, der sich auf und ab bewegt (z-Achse). Am unteren Ende des Greifarms ist die Greifeinrichtung angeordnet. Derartige Portalroboter haben sich für die Entpalettierung von Bobinenpaletten bewährt.

Die Erfindung wird nachstehend ohne Beschränkung des allgemeinen Erfindungsgedankens anhand von Ausführungsbeispielen unter Bezugnahme auf die beigefügten schematischen Zeichnungen exemplarisch beschrieben, auf die im übrigen bzgl. der Offenbarung aller im Text nicht näher erläuterten erfindungsgemäßen Einzelheiten ausdrücklich verwiesen wird. Es zeigen:
- Fig. 1: schematisch eine Draufsicht auf zwei Paletten;
- Fig. 2: eine schematische Darstellung einer Bobine, bei der der Mittelpunkt gemäß dem Stand der Technik ermittelt wird;
- Fig. 3a, Fig. 3b: schematisch eine Draufsicht bzw. Vorderansicht einer erfindungsgemäßen Vorrichtung;
- Fig. 4: schematisch das Prinzip der Pulszeitmessung und
- Fig. 5: schematisch den Ablauf einer erfindungsgemäßen Palettenabtastung.

In den Figuren sind jeweils gleiche oder gleichartige Elemente bzw. entsprechende Teile mit denselben Bezugsziffern versehen, so dass von einer entsprechenden erneuten Vorstellung abgesehen wird und lediglich Abweichungen der in diesen Figuren dargestellten Ausführungsbeispiele gegenüber dem ersten Ausführungsbeispiel erläutert werden.

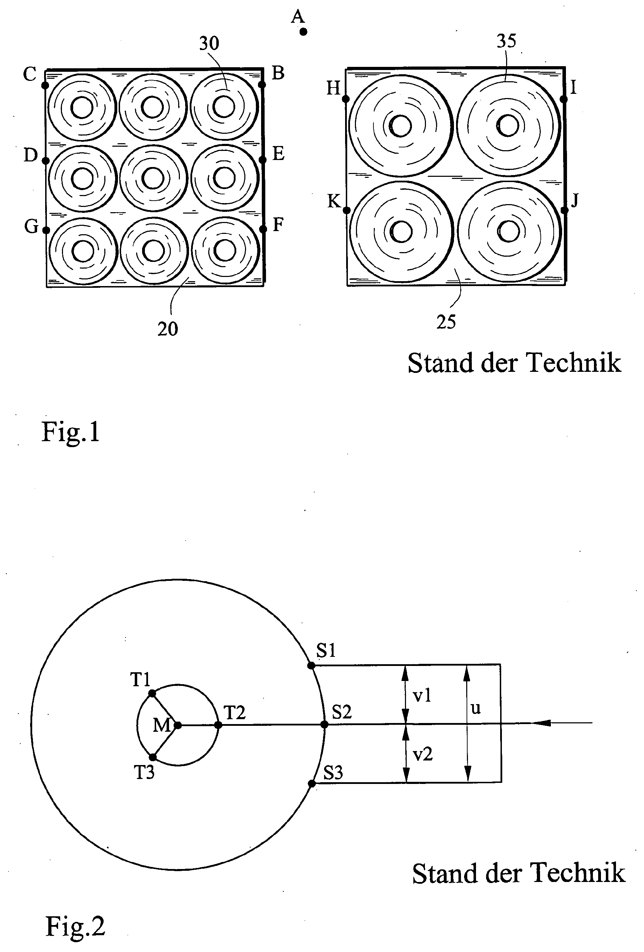

In Fig. 1 und Fig. 2 sind schematisch der Ablauf der Abtastung von Paletten 20, 25 mit Bobinen 30, 35 sowie die Ermittlung des Bobinenmittelpunktes gemäß dem Stand der Technik dargestellt. Hierbei sind die Bobinen 30, 35 auf den Paletten 20, 25 in Reihen nebeneinander und in Lagen übereinander angeordnet.

Die Beladungshöhe der Paletten 20, 25 wird gemäß dem Stand der Technik mit einem Ultraschallsensor durch mäanderförmiges Abfahren der einzelnen Paletten 20, 25 ermittelt. Hierbei wird der Ultraschallsensor zusammen mit einem Greifkopf des Roboters, insbesondere Portalroboter, aus einer Parkposition A heraus in Richtung B. Vom Punkt B wird der Ultraschallsensor über die Punkte C, D, E, F nach G verfahren. Hierbei werden die Änderungen in der Stapelhöhe in einer Steuerung gespeichert. Danach fährt der Ultraschallsensor vom Punkt G zurück in die Parkposition A.

Im Anschluss daran fährt der Ultraschallsensor aus der Parkposition A zum Punkt H an der Palette 25 und tastet die Palette 25 in gleicher Weise über die Punkte H, I, J, K schlangenlinienartig bzw. mäanderförmig ab. Aus der Endposition K fährt der Ultraschallsensor schließlich wieder in die anfängliche Parkposition A.

In Fig. 2 ist schematisch der Ablauf zur Ermittlung des Bobinenmittelpunkts M der Bobine 30 dargestellt. Hierzu fährt der Greifkopf des Roboters aus der Parkposition A (Fig. 1) zu der zu greifenden Bobine 30. Der Greifkopf nähert sich dabei an die Bobine 30 an, bis eine Laserlichtschranke des Greifkopfs die Außenkante der Bobine 30 im Punkt S2 feststellt. Anschließend fährt der Greifkopf wieder zurück und wird um die Streck v1 versetzt. Danach wird der Greifkopf wieder in Richtung der Bobine 30 angenähert, bis die Laserlichtschranke die Außenkante der Bobine in Punkt S1 registriert. Darauf wird der Greifkopf wieder zurückgefahren und versetzt um die Strecke u wieder in Richtung der Bobine 30 angenähert, bis die Lichtschranke die Außenkante der Bobine 30 im Punkt S3 feststellt. Nachfolgend wird der Greifkopf zurückgefahren und um die Strecke v2 versetzt.

Aus den Koordinaten der Punkte S1, S2 und S3 berechnet die Steuerung den Durchmesser der Bobine 30.

Im Anschluss daran wird der Greifkopf aus dem Punkt S2 in Richtung des Bobinenmittelpunkts M verfahren. Die Steuerung speichert dabei die Koordinaten des Punkte T2, an dem die Laserlichtschranke den Übergang von Material auf den Bobinenkern feststellt. Vom Punkt T2 wird der Greifkopf über den Punkt M zum Punkt T1 verfahren, bis wiederum die Lichtschranke den Übergang vom Material auf den Bobinenkern erkennt. Schließlich wird vom Punkt M aus der Greifkopf über den Punkt T3 hinaus verfahren und anschließend zurück über den Punkt T3 wieder in Richtung des Bobinenmittelpunkts M bewegt, bis die Lichtschranke wiederum den Übergang vom Material auf den Bobinenkern feststellt.

Aus den Koordinaten der Punkte T1, T2 und T3 berechnet die Steuerung die exakten Koordinaten des Bobinenmittelpunktes M.

Dieses Verfahren gemäß dem Stand der Technik ist insgesamt sehr zeitaufwendig, so dass die Produktionsgeschwindigkeit nicht gesteigert werden kann. Darüber hinaus erfordert dieses Verfahren ein fest vorgegebenes Bobinenmuster, wodurch die Anzahl der möglichen Bobinenmuster beschränkt ist.

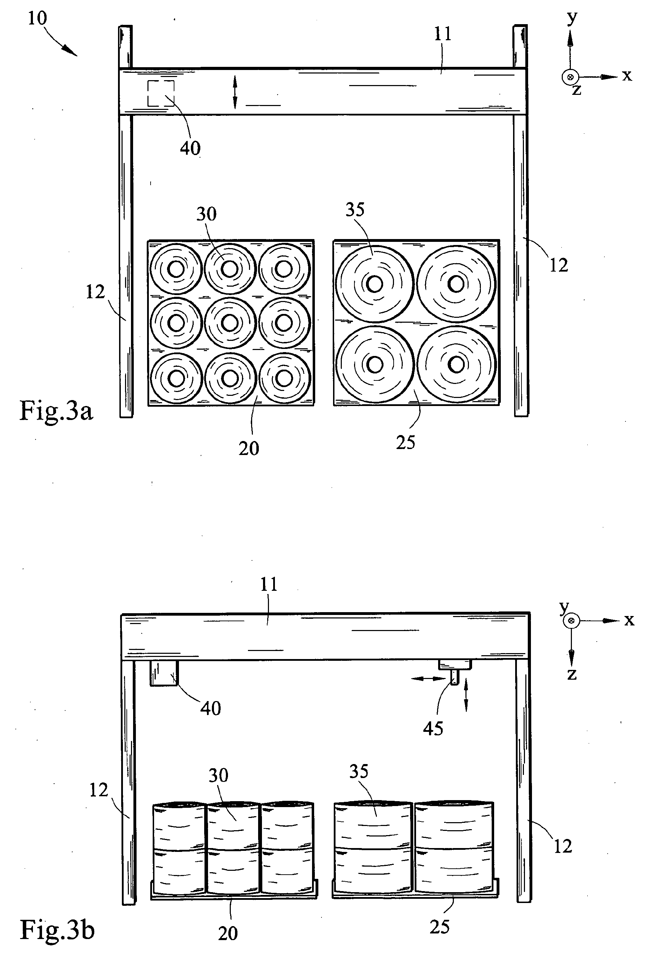

In Fig. 3a ist eine Draufsicht auf eine erfindungsgemäße Vorrichtung 10 zum Entpalettieren von Bobinenstapeln schematisch dargestellt. In Fig. 3b ist eine Vorderansicht der Vorrichtung 10 gezeigt. Eine derartige Vorrichtung wird allgemein auch als Portalroboter bezeichnet.

Die Vorrichtung zum Entpalettieren von Bobinenstapeln verfügt über ein Rahmengestell 12 mit einem horizontal verfahrbaren Querträger 11. Der Querträger 11 ist zwischen den Trägern des Rahmengestells 12 angeordnet. Zwischen dem Rahmengestell 12 sind zwei Paletten 20, 25 mit gestapelten Bobinen 30, 35 platziert.

Mittels eines am Querträger 11 beweglich angeordneten Laserdistanzmeßsystems 40 werden die Bobinenstapel 30, 35 während einer Abtastfahrt des Laserdistanzmeßsystems 40 erfasst. Das Laserdistanzmeßsystem 40 wird linear und horizontal über die Paletten 20, 25 verfahren. Das Laserdistanzmeßsystem 40 arbeitet nach dem Prinzip der Pulszeitmessung, wobei durch einen internen Drehspiegel ein gepulster Laserstrahl abgelenkt und die Bobinen sowie deren Umgebung fächerförmig abgetastet wird. Durch die Laufzeitmessung des Laserimpulses wird ein genauer Wert für den Abstand zwischen dem Laserdistanzmeßsystem 40 und der reflektierenden Fläche der gestapelten Bobinen 30, 35 ermittelt.

Die topologischen Daten der Bobinenstapel 30, 35 werden dadurch erreicht, dass die Messung der Laufzeit eines Laserimpulses immer einer bestimmten Winkelstellung des Laserspiegels zugeordnet wird. Somit wird während eines kompletten, strichförmigen Überstreifens einer Palette mit Bobinenstapeln ein strichförmiges Höhenbild der Palette gewonnen. Anschließend werden die topologischen Daten in einer Datenbank abgelegt.

Je nach erforderlicher Auflösung ist die Drehung des Laserspiegels parametrisierbar d.h. dass der Laserspiegel in vorbestimmten diskreten Winkelschritten bewegt wird, z.B. in Winkelschritten von 0,25° bis 1,0°.

Bei einer einmaligen Überfahrt des Laserdistanzmeßsystems über die Bobinenstapel 25 wird der in parallelen Abtastebenen durchgeführte Messvorgang in bestimmten Abständen in Fahrtrichtung wiederholt. Nach der Abtastung der Paletten 20, 25 ermittelt eine Auswerteeinheit aus dem dreidimensionalen Höhenprofil d.h. aus den topologischen Daten die Höhe und die Koordinaten der Mittelpunkte aller Bobinen, die auf der obersten Lage der Paletten 20, 25 angeordnet sind. Durch Vergleichen eines Messsignals mit einem vorgegebenen Muster oder durch den Vergleich zum vorigen oder vorvorigen Messsignal wird festgestellt, ob es sich um das Abbild einer Bobine handelt. Passt das Messsignal zum Muster einer Bobinenmitte, so sind damit auch die Koordinaten der Mittelpunkte der Bobinen bekannt. Gleichzeitig ist auch der Wert für die Bobinenhöhe ermittelt. Da die Auswerteeinheit gleichzeitig von einer Steuerung die Werte der Y-Koordinaten (Fig. 3b) empfängt, kann anschließend der Raumpunkt der Mittelpunktkoordinaten der Bobinen an eine Maschinensteuerung übermittelt werden.

Erfindungsgemäß werden durch das Laserdistanzmeßsystem 40 die Bobinensuchdauer und die Ermittlung der Mittelpunkte der Bobinen 30, 35 auf ein Minimum reduziert, wodurch die Produktionsgeschwindigkeit der Vorrichtung gesteigert wird.

Die Vorrichtung 10 (Fig. 3b) verfügt ferner über eine Greifvorrichtung 45, mittels der die Bobinen 30, 35 von den Paletten 20, 25 entnommen werden und einer Abspulvorrichtung oder einem Puffermagazin zugeführt werden.

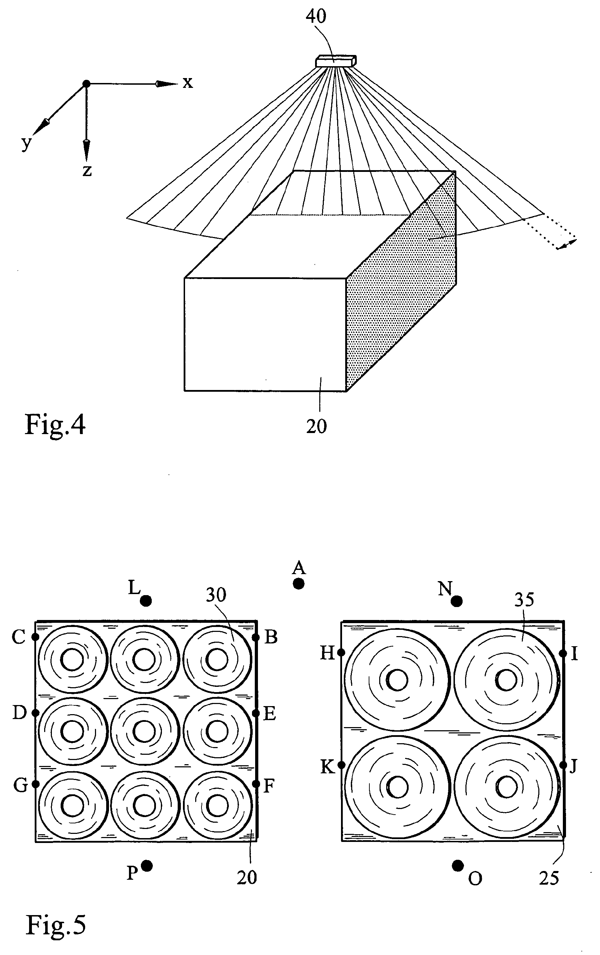

In Fig. 4 ist schematisch die fächerförmige Abtastung der Oberfläche eines Objektes - im vorliegenden Fall eine Palette 20 mit Bobinen - dargestellt. Bedingt durch das optische Tasterprinzip werden nur Objekte mit einem guten Reflexionsverhalten detektiert. Hierbei sendet das Laserdistanzmeßsystem 40 innerhalb seines Arbeitsfeldes periodisch Lichtimpulse aus. Treffen die Lichtimpulse auf ein Objekt, wird das Licht reflektiert und vom Laserdistanzmeßsystem 40 empfangen und ausgewertet.

Aus der Laufzeit des Lichts rechnet das Laserdistanzmeßsystem 40 die genauen Koordinaten des "gesehenen" Objektes 20. Deshalb ist das Laserdistanzmeßsystem eine Art optischer Distanzsensor bzw. optisches Flächenradar. Das Laserdistanzmeßsystem 40 erzeugt gebündelte Lichtimpulse, die durch einen internen Drehspiegel abgelenkt werden, so dass innerhalb einer bestimmten Zeitdauer, zum Beispiel 40ms, in allen Winkelsegmenten des Arbeitsbereiches des Laserdistanzmeßsystems 40 ein Lichtimpuls ausgelöst wird. Trifft der ausgesendete Lichtimpuls auf ein Objekt, zum Beispiel die Bobinen einer Palette 20, so wird der Lichtimpuls reflektiert und vom Laserdistanzmeßsystem 40 erfasst und ausgewertet. Die Laufzeit des Lichtimpulses ist ein direktes Maß für die Entfernung des Objektes.

Durch die fächerförmige Abtastung und eine anschließende Vorwärtsbewegung des Laserdistanzmeßsystems, zum Beispiel in y-Richtung, wird ein strichförmiges Höhenabbild der Palette 20 ermittelt und in einer Datenbank abgespeichert. Der fächerförmig durchgeführte Messvorgang wird während einer Überfahrt des Laserdistanzmeßsystems 40 zum Beispiel alle 5mm in Fahrtrichtung wiederholt. Nach der Abtastung der Palette 20 werden aus dem dreidimensionalen Höhenprofil die Höhe und die Mittelpunktkoordinaten aller Bobinen, die auf der obersten Lage der Palette 20 angeordnet sind, ermittelt.

In Fig. 5 ist schematisch der Ablauf der Palettenabtastung gemäß der Erfindung dargestellt. Hierbei wird die Greifeinrichtung zusammen mit dem Laserdistanzmeßsystem aus der Parkposition A zum Punkt L verfahren. Im Punkt L wird der Laserscanner aktiviert und von Punkt L geradeaus nach M bewegt. Während dieser linearen Fahrt sendet das Laserdistanzmeßsystem Lichtpulse, die durch einen internen Drehspiegel abgelenkt werden, wodurch die Palette 20 fächerartig abgetastet wird. Nach Erreichen des Punktes M ermittelt die Auswerteeinheit aus den Messdaten die Koordinaten aller Mittelpunkte der obersten Lage der Palette 20 sowie deren Höhe.

Anschließend wird der Laserscanner vom Punkt M zur Parkposition A zurückbewegt. Danach wird der Greifkopf aus der Parkposition A zum Punkt N gefahren, so dass das Laserdistanzmeßsystem während einer geraden Fahrt vom Punkt N zum Punkt O die Palette 25 in gleicher Weise abtastet.

Dieses Verfahren reduziert die Bobinensuchdauer auf ein Minimum. Dabei eignet sich das erfindungsgemäße Verfahren auch für Paletten ohne ein vordefiniertes Bobinenmuster.

Durch die vorliegende Erfindung wird die Bestimmung der Lage von Bobinen oder anderer palettierbarer Objekte, insbesondere der tabakverarbeitenden Industrie, auf einer Unterlage vereinfacht und verbessert.

### Bezugszeichenliste

- 10: Vorrichtung
- 11: Querträger
- 12: Rahmengestell
- 20: Palette
- 25: Palette
- 30: Bobine
- 35: Bobine
- 40: Laserdistanzmeßsystem
- 45: Greifvorrichtung

## Patentansprüche

1. Verwendung eines, insbesondere nach dem Prinzip der Pulszeitmessung arbeitenden, Laserdistanzmeßsystems (40) zur Erfassung von topologischen Daten eines Bobinenstapels (30, 35), wobei anhand der topologischen Daten der Mittelpunkt wenigstens einer Bobine (30, 35) ermittelt wird.

2. Verwendung nach Anspruch 1, **dadurch gekennzeichnet, dass** der Bobinenstapel (30, 35) in mehreren, vorzugsweise parallelen, Linien abgerastert wird.

3. Verwendung nach Anspruch 1 oder 2, **dadurch gekennzeichnet, dass** die topologischen Daten während einer Rasterfahrt des Laserdistanzmeßsystems (40) erfasst werden.

4. Verwendung nach einem der Ansprüche 1 bis 3, **dadurch gekennzeichnet, dass** während der Rasterfahrt ein gepulster Laserstrahl des Laserdistanzmeßsystem (40) durch einen internen Drehspiegel abgelenkt und dabei die Oberfläche der Bobinenstapel (30, 35) fächerartig und zweidimensional nach Art eines Laser-Radars abgetastet wird.

5. Verwendung nach einem oder mehreren Ansprüche 1 bis 4, **dadurch gekennzeichnet, dass** anhand der topologischen Daten die Höhe wenigstens einer Bobine (30, 35) ermittelt wird.

6. Verwendung nach einem oder mehreren der Ansprüche 1 bis 5, **dadurch gekennzeichnet, dass** das Laserdistanzmeßsystem (40) an einem Portalroboter (10) angeordnet ist.

7. Vorrichtung (10) zum Entpalettieren eines Bobinenstapels (30, 35), **dadurch gekennzeichnet, dass** wenigstens ein, insbesondere nach dem Prinzip der Pulszeitmessung arbeitendes, Laserdistanzmeßsystem (40) zur Ermittlung der topologischen Daten des Bobinenstapels (30, 35) vorgesehen sind.

8. Vorrichtung (10) nach Anspruch 7, **dadurch gekennzeichnet, dass** mittels der topologischen Daten der Mittelpunkt und/oder die Höhe wenigstens einer Bobine (30, 35) ermittelbar ist.

9. Vorrichtung (10) nach Anspruch 7 oder 8, **dadurch gekennzeichnet, dass** dem Lasermeßsystems (40) wenigstens eine Greifvorrichtung (45) für die Bobinen (30, 35) zugeordnet ist.

10. Vorrichtung (10) nach Anspruch 8 oder 9, **dadurch gekennzeichnet, dass** die Greifeinrichtung (45) mittels der topologischen Daten und/oder anhand der ermittelten Mittelpunkte der Bobinen (30, 35) steuerbar ist.

11. Vorrichtung (10) nach einem oder mehreren der Ansprüche 7 bis 10, **dadurch gekennzeichnet, dass** die Vorrichtung (10) als Portalroboter ausgebildet ist.
